# EUROPEAN PATENT SPECIFICATION

(11) **EP 0 390 535 B1**
(45) Date of publication and mention of the grant of the patent: **30.08.1995**
(21) Application number: 90303312.4
(22) Date of filing: 28.03.1990
(51) Int. Cl.: B29C 70/10, B29D 24/00, B31D 5/00

(54) **Method of making a rigid structure**
Verfahren zur Herstellung einer steifen Struktur
Procédé par la fabrication d'une structure rigide

(30) Priority: 28.03.1989 ZA 892253; 21.08.1989 ZA 896347; 15.01.1990 ZA 900250
(43) Date of publication of application: 03.10.1990
(73) Proprietor: PLASCON TECHNOLOGIES (PROPRIETARY) LIMITED, Bedfordview (ZA)
(72) Inventor: Symons, Michael Windsor, Pretoria, Transvaal (ZA)
(74) Representative: Ablewhite, Alan James

(56) References cited:
- EP-A- 0 244 120
- CH-A- 603 332
- DE-A- 2 836 418
- FR-A- 692 976
- FR-A- 869 397
- GB-A- 842 815
- US-A- 3 340 119
- US-A- 4 223 053

## Description

This invention relates to a method of making a rigid structure from one or more lengths of tubing or sections of tubing of a natural fibre material such as paper, and to the structures so formed.

Rigid materials formed from lengths of tubing glued together are well known in the construction industry. For example; DE-A-2 836 418 teaches a method of making a rigid lightweight material from lengths of tubing of a natural fibre material, i.e. paper, which includes impregnating the tubes with a hardenable synthetic resin such that a plurality of tubes, touching one another, are glued together during the hardening of impregnating resin.

Rigid structures made from lengths of tubing, e.g. pipes, ladders and fencing and from lengths of sections of tubing, e.g. guttering and cattle troughs are well known. However, there is always a need for new methods of making such rigid structures utilizing new types of materials.

According to the invention there is provided a method of making a rigid structure from tubing of a natural fibre material by assembling lengths of tubing into a desired structure, impregnating with a hardenable resin and hardening the resin, characterised in that the method includes the steps of:
(1) assembling the one or more lengths of tubing or sections of tubing into the desired structure;
(2) impregnating the one or more lengths of tubing or sections of tubing with a liquid composition comprising a thermosetting resin, an extending liquid for the thermosetting resin and a catalyst for the thermosetting resin the liquid composition being selected from (a) a phenolic resin, a C₁-C₄ alcohol, and a catalyst for the phenolic resin, and (b) a polyester resin or an epoxy resin, an extending liquid selected from the group consisting of dichloromethane, trichloroethylene, perchloroethylene, trichlorofluoromethane and trichlorofluoroethane, and a catalyst for the resin;
(3) recovering the extending liquid; and
(4) polymerising the thermosetting resin to form the rigid structure.

In the method of the invention, step (1) may be carried out before step (2) or step (2) may be carried out before step (1). In other words, it is optional whether the structure is first assembled and then impregnated or whether the elements of the structure are first impregnated and then assembled. However, the polymerisation step (3) always takes place after steps (1) and (2) have been completed.

The tubing used in the method of the invention may be of any suitable cross-sectional shape, (i.e. transverse to the axis of the tubing), e.g. circular, rectangular, square, hexagonal, oval, or the like. The section of tubing may be any section cut from the length of tubing through or parallel to the axis of the tubing. An example of a section of tubing is a section of tubing having a semi-circular cross-sectional shape cut from a length of tubing having a circular cross-sectional shape.

The rigid structure, in its simplest form, may comprise a single length of tubing, e.g. a pipe or a single length of a section of tubing, e.g. a gutter. Alternatively, the rigid structure may comprise two or more lengths of tubing or two or more lengths of sections of tubing or one or more lengths of tubing and one or more lengths of sections of tubing, in which case in step (3), the thermosetting resin is polymerised to join the two or more lengths of tubing, or the two or more lengths of sections of tubing, or the one or more lengths of tubing and the one or more lengths of sections of tubing to one another to form the rigid structure.

The rigid structure may also include one or more additional elements of a natural fibre material, e.g. a sheet of a natural fibre material or a shaped part of a natural fibre material. In this case, in step (1) of the method of the invention the additional element or elements is assembled with the one or more lengths of tubing or sections of tubing into the desired structure, in step (2) the additional element or elements are impregnated with the liquid composition, and in step (3) the thermosetting resin is polymerised to join the one or more length of tubing or sections of tubing and the additional element or elements to one another to form the rigid structure.

The tubing used in the method of the invention is made of a natural fibre material of any suitable type. Examples of suitable natural fibre materials include paper, textile material, bagasse, cotton, sisal, flax, hemp, straw, jute, and the like. The natural fibre material may be reinforced with other fibres, for example fibres selected from carbon fibres, glass fibres and synthetic fibres such as polyester or aramid fibres, and the like.

Preferably, the tubing used in the method of the invention is spirally wound or convolutedly wound kraft or chipboard paper tubing.

In step (1) of the method of the invention, the one or more lengths of tubing or sections of tubing are assembled into the desired structure. This may be carried out in any suitable manner. For example, when the structure comprises a ladder, the ladder uprights may be punched with suitably spaced holes whereafter the ladder cross-bars may be inserted into the punched holes.

In step (2) of the method of the invention, the one or more lengths of tubing or sections of tubing are impregnated with the liquid composition. Again, this may be carried out in any suitable manner, for example pressure impregnation.

In step (3) of the method of the invention, the thermosetting resin is polymerised, for example by subjecting the assembled structure of step (2) to suitable conditions of temperature and pressure to cause polymerisation.

After step (3) of the method of the invention, the rigid structure may be further treated in various ways. For example, the surfaces of the rigid structure may be coated with a suitable coating or may have laminated thereto sheets of another type of material, for example fibreglass or aluminium foil. Further, the hollow spaces in the rigid structure may be filled with a suitable material such as a foam, a polymer concrete or a cement or the like.

In step (2) of the method of the invention the one or more length of tubing or sections of tubing are impregnated with a liquid composition comprising firstly a thermosetting resin, secondly an extending liquid for the thermosetting resin and thirdly a catalyst for the thermosetting resin.

The thermosetting resin may be for example a phenolic resin in which case the extending liquid may be water, a C₁-C₄ alcohol, a higher carbon alcohol such as furfuryl alcohol, acetone or methylethyl ketone, and the catalyst may be a suitable acidic catalyst for phenolic resins.

The thermosetting resin may also be a polyester resin or an epoxy resin in which case the extending liquid may be a halogenated hydrocarbon such as dichloromethane, trichlorotrifluoroethane, trichloroethylene, perchloroethylene or fluorotrichloromethane, benzyl alcohol, nonylphenol, dibutyl phthalate, xylene, and methylethyl ketone, and the catalyst may be any suitable latent catalyst for a polyester or epoxy resin.

The thermosetting resin may also be an acrylic or methacrylic acid ester resin, a formaldehyde resin such as a urea or a melamine formaldehyde resin, and the like.

There are two preferred liquid compositions according to the invention. The first preferred liquid composition comprises a phenolic resin, 20 - 100% by weight of the resin of an extending liquid which is a C₁ to C₄ alcohol, i.e. methanol, ethanol, propanol or butanol, and a catalyst for the phenolic resin.

The second preferred liquid composition of the invention comprises a polyester resin or an epoxy resin, 20 - 100% by weight of the resin of an extending liquid selected from dichloromethane, trichloroethylene perchloroethylene, fluorotrichloromethane and trichlorotrifluoroethane, and a catalyst for the resin.

The liquid composition of the invention may also contain other components such as an inhibitor, an accelerator, a surfactant, extending particles such as silica fume, and the like.

According to a second aspect of the invention there is provided a rigid structure made by the method set out above.

The rigid structure of the invention may take many forms. Examples include: pipes; tanks made from overlapping sections of tubing; conveyor rollers; ladders; mine props; racking; explosive blasting tubes; gutters and down pipes; fencing; containers; paint roller cores; cattle troughs; soil drainage and irrigation systems; insulated ducting and curtain rods.

### BRIEF DESCRIPTION OF THE DRAWINGS

Figure 1a is a schematic side view of a tank according to the invention;
Figure 1b is a schematic sectional view through the tank of Figure 1a; and
Figure 1c is a schematic view of a method of assembling the tank of Figures 1a and 1b;
Figure 2 is a perspective view of a ladder according to the invention:
Figure 3 is a perspective view of a gutter and downpipe according to the invention;
Figure 4 is a perspective view of a structural framework according to the invention;
Figure 5 is a schematic sectional view of a structural element according to the invention; and
Figure 6 is a perspective view of a cattle trough according to the invention.

### DESCRIPTION OF EMBODIMENTS

The present invention relates to a method of making a rigid structure from one or more lengths of tubing or sections of tubing or a combination thereof of a natural fibre material. The crux of the method of the invention is that the one or more lengths of tubing or sections of tubing are assembled into the desired structure and then impregnated with the liquid composition comprising a thermosetting resin, an extending liquid for the thermosetting resin and a catalyst for the thermosetting resin, or vice versa, and then that the thermosetting resin is polymerised to make the natural fibres rigid and thus to form the rigid structure.

The one or more lengths of tubing or sections of tubing comprise a natural fibre material. Examples of suitable natural fibre materials include paper, textile material, bagasse, cotton, sisal, flax, hemp, straw, jute, and the like. The natural fibre material may be reinforced with other fibres, for example fibres selected from carbon fibres, glass fibres and synthetic fibres such as polyester or aramid fibres, and the like. For example, a length of tubing may be made from a suitable natural fibre material and then another fibrous material, either natural or synthetic may be wound around the tubing to reinforce it. The natural fibre material may also be extended with suitable particle extenders such as silica fume, glass microballoons. corundum powder, or the like.

In step (1) of the method of the invention, the one or more lengths of tubing or sections of tubing and optionally the additional element or elements are assembled into the desired structure. The method of assembly will depend upon the structure to be formed. For example, when the rigid structure is simply a length of pipe then the provision of a length of tubing is all that is required. When the rigid structure is to be for example a ladder, then two lengths of tubing are placed to form the ladder uprights and suitably spaced holes are punched therein, to receive a further set of lengths of tubing to form the cross-bars of the ladder. Lengths of fencing or structural framework or racking are assembled in a similar manner. Another example is the formation of a rigid structure such as a tank from a plurality of lengths of sections of tubing. In this case, the sections of tubing are suitably overlapped one with another to form a cylinder which can then be impregnated and polymerised.

In step (2) of the method of the invention, which as stated above can occur before or after step (1), the one or more lengths of tubing or sections of tubing and optionally the additional element or elements are impregnated with a liquid composition. The liquid composition comprises a thermosetting resin, an extending liquid for the thermosetting resin and a catalyst for the thermosetting resin. Examples of various types of liquid compositions for use in the method of the invention are given below.

It is desirable that the pre-catalysed thermosetting resin has an extended pot life, i.e. the period of time during which no significant viscosity change occurs in the resin mix. A pot life of 14 - 25 days is desirable. This may be achieved by suitable selection of the thermosetting resin and the extending liquid and the catalyst. The thermosetting resin, once precatalysed, may also be kept at a low temperature, for example below 10°C to extend the pot life.

The extending liquid has other important functions which are to provide variability as to the weight of the resin to be impregnated into the lengths of tubing or sections of tubing to control resin viscosity, not to interfere with polymerisation and to be easily removed from the impregnated material.

The thermosetting resin may be a phenolic resin (phenol formaldehyde resin), preferably a liquid phenolic resin, which can be polymerised at room temperature or elevated temperature. Examples of suitable phenolic resins include:
Polylam 2432 from National Chemical Products Limited of Germiston, South Africa, which is a liquid phenolic resin designed to cure at room temperature with an acidic catalyst such as a blend of sulfonic acids such as Catalyst VX-21 of National Chemical Products Limited;
Cellobond J2027L, J2018L, J20/1096L and J20/1081L from British Petroleum Company plc, which may be catalysed with a catalyst such as Phencat 10, Phencat 15, or the VCM90 from British Petroleum Company plc or
VX-21 from National Chemical Products Limited;
A phenol-furfural resin catalysed with hexamethylene tetramine;
A blend of a phenolic resin with a melamine formaldehyde or a urea formaldehyde resin.

Suitable extending liquids for use with phenolic resins may be either solvents of the resin or low viscosity diluents and may be either reactive or non-reactive. Typical examples include water; C₁C₄ alcohols such as methanol, ethanol, propanol and butanol; higher carbon alcohols such as furfuryl alcohol; acetone and methylethyl ketone.

The thermosetting resin may also be an epoxy resin. The preferred epoxy resins are typically low viscosity liquid epoxide resins manufactured from epichlorohydrin and bisphenol F. Typical examples of such resins include those manufactured by Shell Chemical Company under the names Epikote 816, 862, 232, 235 and 236 and those manufactured by Ciba Geigy AG under the names XD.4150, XSA.214, Araldite AZ.15 and Araldite PY.340-2. Other suitable epoxy resins include epoxy resins with blocked amine functions, such as the reaction product of phthalic anhydride with diethylene triamine.

Suitable latent catalyst systems for use with epoxy resins include those catalyst systems supplied by Anchor Chemicals (UK) Limited such as Ancamine 2014S which is a modified polyamine; Anchor catalyst 1786B which is a 50/50 solution of p-toluene sulphonate of 2-amino-2-methyl-1-propanol in n-butanol; Anchor catalyst S.475 which is a 50/50 solution of morpholinium-p-toluene sulphonate in ethylene glycol monoethyl ether; Anchor catalyst K.61B; Ancamide 2066; boron trifluoride based catalysts include Anchor 117, 1171, 1222, 1040 and 1115 which consist of chemically modified amine complexes of boron trifluoride; Ancamine 1482 which is a liquid eutectic blend of aromatic amines; Ancamine SRX which is an aromatic polyamine; Ancamine SP which is a diamino diphenyl sulphone; and the like. These catalysts generally trigger polymerisation at a temperature of around 80°C or upwards.

Suitable extending liquids for use with epoxy resins include halogenated hydrocarbons such dichloromethane, trichloroethane, carbon tetrachloride, chloroform, trichlorofluoromethane, perchloroethylene trichloroethylene. trichlorofluoromethane and trichlorotrifluoroethane; xylene; methylethyl ketone; butyl glycidyl ether; cresyl; glycidyl ether; p-tert-butyl glycidyl ether; glycidyl ethers of C₈-C₁₄ alcohols; butane diol glycidyl ether; and acetone.

The thermosetting resin may also be a liquid polyester resin such as the unsaturated isophthalic or orthophthalic liquid polyester resins. Examples of these are those manufactured by Scott Bader of England including Crystic 272 catalysed by catalyst powder B and Crystic 196, and those under the Atlac brand by DSM.

Other suitable polyester resins are those produced by National Chemical Products, Germiston, South Africa, such as Polylite 33410, Polylite 8130, Polylite 8000 and Polylite 8382X. Suitable latent catalysts for these resins include di-tert-butyl peroxy 3.3.5 tri-methylcyclohexane in dibutyl phthalate such as those sold by Akzo Chemie under the name Triganox 29B240, Lucidol KL50, Triganox 21, Triganox C or Triganox K-70, benzoyl peroxide formulations, t-butyl perbenzoate sold by Interox under codes TBTB and TBPB, dibenzoyl peroxide sold by Interox under code M1KP NA1. These catalysts generally trigger polymerisation at a temperature in the region of 60°C upwards, more typically 80°C upwards.

Suitable extending liquids for use with polyester resins include halogenated hydrocarbons such as dichloromethane, trichloroethylene. perchloroethylene, trichloroethane, trichlorotrifluoroethane, carbon tetrachloride, chloroform and trichlorofluoromethane; toluol; xylene; butyl acetate; cyclohexane; benzene; tetrahydrofuran; acetone and methylethyl ketone.

Another type of thermosetting resin which may be used are the liquid room temperature curing acrylic and methacrylic acid esters and methyl methacrylates, typically catalysed with benzoyl peroxide powders; and urea formaldehyde and melamine formaldehyde resins catalysed with acids, and which may have been internally plasticised with glycols.

The liquid composition for use in the method of the invention may also include other components such as an inhibitor, an accelerator, a surfactant, e.g. a sulfosuccinate for use with phenolic resins or an alkyl aryl sulphonate for use with polyester or epoxy resins, and extending particles such silica fame, micronised corundum, borosilicate and silicon dioxide.

There are two particularly preferred liquid compositions for the use in the method of the invention. These liquid compositions are preferred because they have optimal pot life, they provide for suitable levels of impregnation of the resin into the materials to be impregnated, they provide for easy polymerisation of the thermosetting resin once impregnated, and the extending liquid is easily recovered.

The first preferred liquid composition of the invention comprises a phenolic resin, 20 - 100% by weight of the phenolic resin of an extending liquid which is a C₁ - C₄ alcohol, i.e. methanol, ethanol, propanol or butanol, preferably methanol, and a catalyst for the phenolic resin, preferably an acidic catalyst such as a blend of an organic acid, e.g. a sulphonic acid and an inorganic acid, e.g. phosphoric or sulphuric acid.

The second preferred liquid composition of the invention comprises a polyester resin or an epoxy resin, preferably a polyester resin, 20 - 100% by weight of the resin of an extending liquid which is selected from dichloromethane, trichloroethylene, perchloroethylene, trichlorotrifluoroethane and fluorotrichloromethane, and a suitable catalyst such as t-butyl perbenzoate.

The one or more lengths of tubing or sections of tubing and optionally the additional element or elements may be impregnated with the liquid composition in any suitable manner. One suitable method will now be described.

The lengths to be impregnated are placed in a pressure vessel which is connected to a vacuum pump. The lengths are then subjected to a high vacuum for the purpose of exhausting all free air and gases from the lengths, both intracellular and extracellular. The liquid composition of the invention is then introduced into the pressure vessel. When the pressure vessel is filled with the liquid composition, pressure is applied either by introducing compressed air into the pressure vessel or hydraulically to cause the liquid composition to penetrate the lengths. The duration of the pressure cycle and the pressure itself depends on the nature of the liquid composition and the nature of the lengths. Once the lengths are suitable impregnated, the unused resin is removed from the pressure vessel and the pressure in the vessel is released. This pressure release which may be followed by the imposition of a vacuum, causes vaporisation of the extending liquid which may be recovered and condensed for future use and also serves to promote draining of excess resin. The impregnated lengths are then removed from the pressure vessel. Thereafter, the impregnated lengths are passed to the next step of the method of the invention.

In step (3) of the method of the invention, the thermosetting resin is polymerised to form the rigid structure. When the rigid structure comprises more than one length of tubing or more than one length of section of tubing or a combination of lengths of tubing and sections of tubing and optionally additional element or elements, then the polymerisation also joins the various lengths of tubing or sections of tubing or additional elements to one another to form the rigid structure. Any suitable method of polymerisation may be employed.

One suitable method of polymerisation comprises the application of heat, and optionally also pressure to the assembled structure in any suitable manner. The thermosetting resin may also be selected to polymerise at room temperature.

Once the rigid structure has been formed, it may be further treated. For example, the interior or exterior surfaces of the rigid structure may be coated with a suitable coating or may have laminated thereto sheets of another type of material, for example fibreglass or aluminium foil or rubber. Further, the hollow spaces in the rigid structure may be filled with a suitable material such as a foam or a fine polymer concrete or the like.

A rigid structure of the invention may also be joined, after construction, to another similar rigid structure to make a larger whole. For example, where the rigid structure consists of fencing, the fencing may be firstly constructed in suitable units which may be joined to one another on site as required. The rigid structures may be joined to one another by any suitable method, generally using a suitable adhesive.

Examples of rigid structures of the invention will now be given with reference to the accompanying drawings.

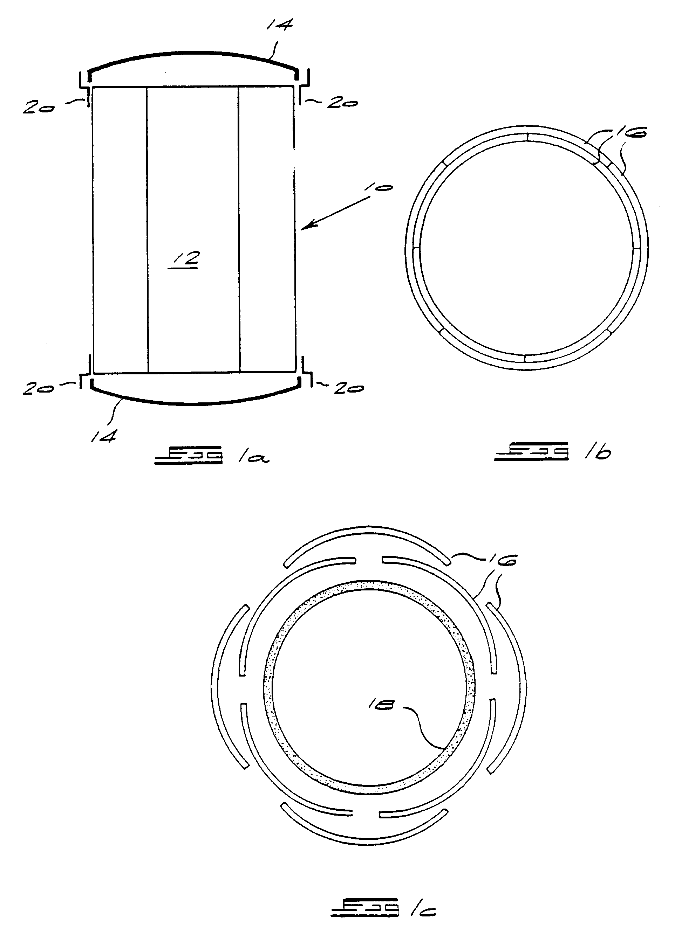

Referring to Figures 1a, 1b and 1c of the accompanying drawings, there is shown a tank 10 which may be for example a tank for liquid storage, an internal heating jacket for an electric water heater or a container for a septic tank. The tank 10 comprises a tank body 12 and two end caps 14. The tank body 12 is formed from a plurality of overlapping sections of tubing 16. To manufacture the tank body 12, the sections of tubing 16 are impregnated with a suitable liquid composition as described above and then assembled on an assembly mandrel 18 as shown in Figure 1c. Once the sections of tubing 16 has been assembled on the assembly mandrel 18, the assembly mandrel 18 may be heated to polymerise the thermosetting resin in the liquid composition and thus to join the sections of tubing 16 to one another to form the rigid tank body 12, or the same may be achieved by space heating. The end caps 14 of the tank 10 may be made of any suitable material such as metal or plastic. However, preferably they may be made from suitably impregnated fibre or chipboard which has been moulded to the desired shape. Thereafter, the thermosetting resin with which the fibre or chipboard has been impregnated may be polymerised to form the end caps 14. The end caps 14 may be attached to the tank body 12 in any suitable manner for example using a fibreglass tape 20 wound around the join between the end caps 14 and the tank body 12.

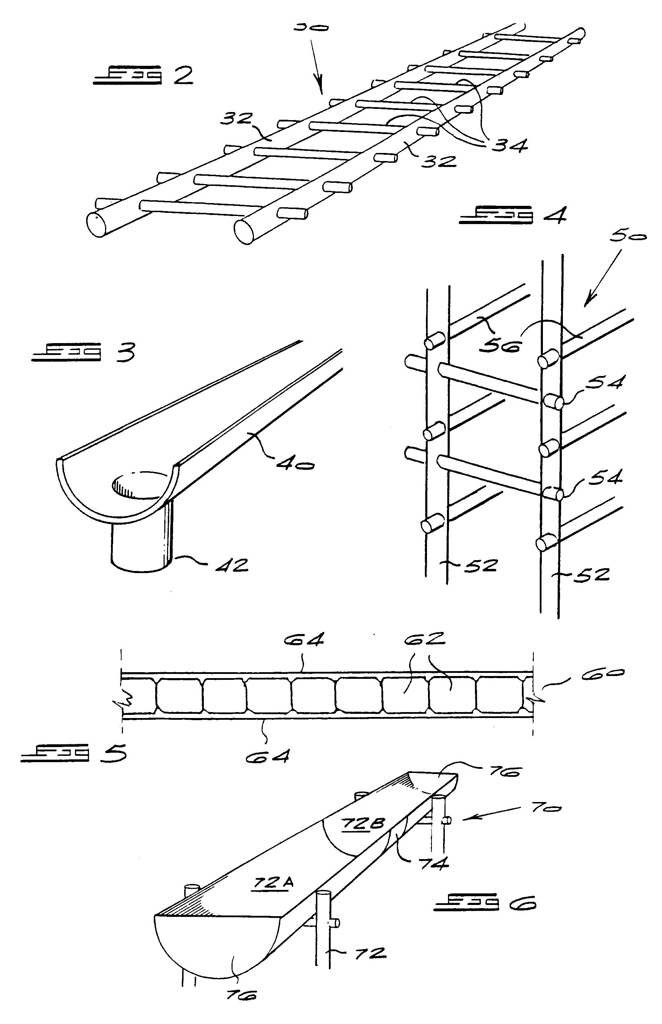

Referring to Figure 2 there is shown a ladder 30 consisting of two ladder uprights 32 and a plurality of cross-bars 34. The ladder uprights 32 and ladder cross-bars 34 are all formed from lengths of tubing. To assemble the ladder 30, the two ladder uprights 32 have a series of equally spaced holes punched therein. The ladder uprights 32 and the ladder cross-bars 34 are all impregnated with a suitable liquid composition as described above. The ladder cross-bars 34 are located in the punched holes in the ladder uprights 32 to form the assembled ladder 30. The thermosetting resin is polymerised to make the cross-bars 34 and the uprights 32 rigid and to join the ladder cross-bars 34 to the ladder uprights 32 and thus to form the ladder 30. The lengths of tubing which form the ladder uprights 32 and the cross-bars 34 may be for example spirally wound kraft or chip paper tubing impregnated with a thermosetting resin such as a phenolic resin mixed with methanol as an extending liquid and an acidic catalyst for the phenolic resin.

Referring to Figure 3, there is shown a gutter 40 with a downpipe connection 42 depending therefrom. The gutter 40 is formed from a semi-circular section of tubing while the downpipe connection 42 is formed from a length of tubing. To manufacture the gutter 40 and downpipe connection 42, a hole for accommodating the downpipe connection 42 is punched in the section of tubing forming the gutter 40 and the downpipe connection 42 is inserted therein. Thereafter, the assembly of the gutter 40 and downpipe connection 42 is impregnated with the liquid composition containing a thermosetting resin, for example by immersing the assembly or its parts in a pressure cylinder containing the liquid composition until a suitable degree of impregnation has taken place. Thereafter the thermosetting resin impregnated in the gutter 40 and downpipe connection 42 is polymerised to make them rigid and to join the two together. The downpipe connection 42 is simply a very short section of tubing which is designed to receive a longer length of tubng, manufactured according to the method of the invention, as a force fit. The gutter 40 and downpipe connection 42 are rigid and waterproof and yet are light and easy to utilize.

Referring to Figure 4 there is shown a section of a space frame assembly 50 consisting of two uprights 52 joined to each other by tubular elements 54 and also carrying a further set of tubular elements 56. The space frame assembly 50 may be manufactured in the same way as the ladder of Figure 2. The space frame assembly 50 may be used as a structural framework for building purposes or may be used as industrial or storage racking with suitable shelves located on the tubular elements 56. The shelves may be made for example from a suitable fibreboard impregnated with a thermosetting resin which has been polymerised and shaped to fit on the tubular elements 56.

Referring to Figure 5, there is shown a structural element 60 which comprises a series of lengths of tubing 62 laid side-by-side and sandwiched between two sheets of paper or chipboard 64. The structural element 60 is manufactured as follows. A plurality of lengths of tubing 62 are impregnated with a suitable liquid composition and likewise two sheets 64 of chip or paperboard are impregnated with the same liquid composition. The lengths of tubing 62, which may initially be circular or rectangular in cross-sectional area are laid on one of the sheets 64 side-by-side touching each other. Thereafter, the second sheet 64 is laid on top of the series of lengths of tubing 62 to form the sandwich. The entire structure is placed between the heated platens of a press and subjected to suitable conditions of temperature and pressure to polymerise the thermosetting resin. This causes adjacent lengths of tubing 62 to be joined to one another and for the lengths of tubing 62 to be joined to the sheets 64 to form a rigid structural element 60. The holes in the lengths of tubing 62 may if desired, be filled with a suitable foam or cement or other filler material. The structural element 60 may be used as roof or floor decking as walling or boarding or the like. The structural element 60 as illustrated has a single layer of lengths of tubing 62. However, it may be constructed with two or more layers of lengths of tubing 62 laid on top of each other and between the two outer sheets 64.

Referring to Figure 6, there is shown a cattle trough 70 supported on a support frame 71. The cattle trough 70 consists of two sections 72A and 72B joined to each other by means of a joint 74. Each section 72A, 72B may be formed from a length of section of tubing impregnated with a suitable liquid composition and then polymerised. The two sections 72A, 72B may be joined to each other with the joint 74 after they have been impregnated and polymerised or before they have been impregnated and polymerised in which case the polymerisation joins the two sections 72A, 72B and the joint 74 to one another. The cattle trough 70 also includes suitable fibreboard end caps 76 which again may be joined to the sections 72A, 72B either prior to polymerisation in which case polymerisation causes the joining or after polymerisation in which case the end caps 76 are glued or otherwise attached to the section 72A, 72B. The support frame 71 may be manufactured from lengths of tubing according to the method of the invention in the same manner as the ladder shown in Figure 2.

The rigid structures of the invention have the advantage that they are rigid and thus are structurally strong, are waterproof, and yet are light and easy to manufacture and handle after manufacture.

## Claims

1. A method of making a rigid structure (12, 30, 50, 60, 70) from tubing of a natural fibre material by assembling lengths of tubing into a desired structure, impregnating with a hardenable resin and hardening the resin, characterised in that the method includes the steps of:
(1) assembling the one or more lengths of tubing (32, 34, 42, 52, 54, 56, 62) or sections of tubing (16, 40, 72A, 72B) into the desired structure (12, 30, 50, 60, 70);
(2) impregnating the one or more lengths of tubing (32, 34, 42, 52, 54, 56, 62) or sections of tubing (16, 40, 72A, 72B) with a liquid composition comprising a thermosetting resin, an extending liquid for the thermosetting resin and a catalyst for the thermosetting resin the liquid composition being selected from (a) a phenolic resin, a C₁-C₄ alcohol, and a catalyst for the phenolic resin, and (b) a polyester resin or an epoxy resin, an extending liquid selected from the group consisting of dichloromethane, trichloroethylene, perchloroethylene, trichlorofluoromethane and trichlorofluoroethane, and a catalyst for the resin;
(3) recovering the extending liquid; and
(4) polymerising the thermosetting resin to form the rigid structure (12, 30, 50, 60, 70).

2. A method according to claim 1 wherein step (1) is carried out before step (2).

3. A method according to claim 1 wherein step (2) is carried out before step (1).

4. A method according to any one of claims 1 to 3 wherein the rigid structure is made from a single length of tubing.

5. A method according to any one of claims 1 to 3 wherein the rigid structure is made from a single length of a section of tubing.

6. A method according to any one of claims 1 to 3 wherein the rigid structure (30, 50, 60) is made from two or more lengths of tubing (32, 34, 52, 54, 56, 62) and wherein in step (4) the thermosetting resin is polymerised to join the two or more lengths of tubing (32, 34, 52, 54, 56, 62) to one another and to form the rigid structure (30, 50, 60).

7. A method according to any one of claims 1 to 3 wherein the rigid structure (70) is made from two or more lengths of sections of tubing (72A, 72B) and wherein in step (4) the thermosetting resin is polymerised to join the two or more lengths of sections of tubing (72A, 72B) to one another to form the rigid structure (70).

8. A method according to any one of claims 1 to 3 wherein the rigid structure is made from one or more lengths of tubing (42) and one or more lengths of sections of tubing (40) and wherein in step (4) the thermosetting resin is polymerised to join the one or more lengths of tubing (42) and the one or more lengths of sections of tubing (40) to one another and to form the rigid structure.

9. A method according to any one of claims 1 to 8 wherein the rigid structure (60) includes one or more additional elements (64) of a natural fibre material, and wherein in step (1) the one or more additional elements (64) are assembled with the one or more lengths of tubing (62) or sections of tubing into the desired structure, in step (2) the one or more additional elements (64) are impregnated with the liquid composition, and in step (4) the thermosetting resin is polymerised to join the one or more additional elements (64) and the one or more lengths of tubing (62) or sections of tubing to one another and to form the rigid structure (60).

10. A method according to any one of claims 1 to 9 wherein the tubing is selected from tubing made from paper, textile material, bagasse, cotton, sisal, flax, hemp, straw and jute.

11. A method according to claim 10 wherein the tubing is made from a natural fibre material reinforced with fibres selecting from the group consisting of carbon fibres, glass fibres and synthetic fibres.

12. A method according to any of claims 1 to 11 wherein the tubing is spirally wound or convolutedly wound kraft or chipboard paper tubing.

13. A method according to any one of claims 1 to 12 wherein in step (2) the liquid composition comprises a phenolic resin, 20 - 100% by weight of the phenolic resin of a C₁-C₄ alcohol, and a catalyst for the phenolic resin.

14. A method according to any one of claims 1 to 13 wherein in step (2) the liquid composition comprises a polyester resin or an epoxy resin, 20 - 100% by weight of the resin of an extending liquid selected from the group consisting of dichloromethane, trichloroethylene, perchloroethylene, trichlorofluoromethane and trichlorotrifluoroethane, and a catalyst for the resin.

## Patentansprüche

1. Verfahren zur Herstellung einer starren Struktur (12, 30, 50, 60, 70) aus einem Rohr aus einem Naturfasermaterial durch Zusammenfügen von Rohrstücken zu einer gewünschten Struktur, Imprägnieren mit einem härtbaren Harz und Härten des Harzes, **dadurch gekennzeichnet**, daß das Verfahren folgende Schritte umfaßt:
(1) Zusammenfügen des mindestens einen Rohrstücks (32, 34, 42, 52, 54, 56, 62) oder Rohrabschnitts (16, 40, 72A, 72B) zu der gewünschten Struktur (12, 30, 50, 60, 70);
(2) Imprägnieren des mindestens einen Rohrstücks (32, 34, 42, 52, 54, 56, 62) oder Rohrabschnitts (16, 40, 72A, 72B) mit einer flüssigen Zusammensetzung, die ein hitzehärtbares Hart, eine Streckflüssigkeit für das hitzehärtbare Harz und einen Katalysator für das hitzehärtbare Harz umfaßt, wobei die flüssige Zusammensetzung ausgewählt ist aus der Gruppe bestehend aus (a) einem Phenolharz, einem C₁-C₄-Alkohol und einem Katalysator für das Phenolharz, und (b) einem Polyesterharz oder einem Epoxyharz, einer Streckflüssigkeit, ausgewählt aus der Gruppe bestehend aus Trichlormethan, Trichlorethylen, Perchlorethylen, Trichlorfluormethan und Trichlortrifluorethan und einem Katalysator für das Harz;
(3) Wiedergewinnen der Streckflüssigkeit; und
(4) Polymerisieren des hitzehärtbaren Harzes zur Bildung der starren Struktur (12, 30, 50, 60, 70).

2. Verfahren nach Anspruch 1, wobei Schritt (1) vor Schritt (2) durchgeführt wird.

3. Verfahren nach Anspruch 1, wobei Schritt (2) vor Schritt (1) durchgeführt wird.

4. Verfahren nach einem der Ansprüche 1 bis 3, wobei die starre Struktur aus einem einzigen Rohrstück hergestellt wird.

5. Verfahren nach einem der Ansprüche 1 bis 3, wobei die starre Struktur aus einem einzigen Stück eines Rohrabschnitts hergestellt wird.

6. Verfahren nach einem der Ansprüche 1 bis 3, wobei die starre Struktur (30, 50, 60) aus mindestens zwei Rohrstücken (32, 34, 52, 54, 56, 62) hergestellt wird und wobei in Schritt (4) das hitzehärtbare Harz zum Miteinanderverbinden der mindestens zwei Rohrstücke (32, 34, 52, 54, 56, 62) und zur Bildung der starren Struktur (30, 50, 60) polymerisiert wird.

7. Verfahren nach einem der Ansprüche 1 bis 3, wobei die starre Struktur (70) aus mindestens zwei Stücken von Rohrabschnitten (72A, 72B) hergestellt wird und wobei in Schritt (4) das hitzehärtbare Harz zum Miteinanderverbinden der mindestens zwei Stücke von Rohrabschnitten (72A, 72B) und zur Bildung der starren Struktur (70) polymerisiert wird.

8. Verfahren nach einem der Ansprüche 1 bis 3, wobei die starre Struktur aus mindestens einem Rohrstück (42) und mindestens einem Stück eines Rohrabschnitts (40) hergestellt wird und wobei in Schritt (4) das hitzehärtbare Harz zum Miteinanderverbinden des mindestens einen Rohrstücks (42) und des mindestens einen Stücks eines Rohrabschnitts (40) und zur Bildung der starren Struktur polymerisiert wird.

9. Verfahren nach einem der Ansprüche 1 bis 8, wobei die starre Struktur (60) mindestens ein zusätzliches Element (64) aus einem Naturfasermaterial umfaßt und wobei in Schritt (1) das mindestens eine zusätzliche Element (64) mit dem mindestens einem Rohrstück (62) oder Rohrabschnitt zu der gewünschten Struktur zusammengefügt wird, in Schritt (2) das mindestens eine zusätzliche Element (64) mit der flüssigen Zusammensetzung imprägniert wird und in Schritt (4) das hitzehärtbare Harz zum Miteinanderverbinden des mindestens einen zusätzlichen Elements (64) und des mindestens einen Rohrstücks (62) oder Rohrabschnitts und zur Bildung der starren Struktur (60) polymerisiert wird.

10. Verfahren nach einem der Ansprüche 1 bis 9, wobei das Rohr ausgewählt wird aus Rohren hergestellt aus Papier, Texilmaterial, Bagasse, Baumwolle, Sisal, Flachs, Hanf, Stroh und Jute.

11. Verfahren nach Anspruch 10, wobei das Rohr aus einem Naturfasermaterial hergestellt wird, das mit Fasern verstärkt ist, die aus der Gruppe bestehend aus Kohlenstoffasern, Glasfasern und Kunststoffasern ausgewählt sind.

12. Verfahren nach einem der Ansprüche 1 bis 11, wobei das Rohr ein spiralförmig gewickeltes oder übereinander gerollt gewickeltes Kraft- oder Pappkarton-Papierrohr ist.

13. Verfahren nach einem der Ansprüche 1 bis 12, wobei in Schritt (2) die flüssige Zusammensetzung aus einem Phenolharz, einem C₁-C₄-Alkohol mit 20 bis 100 Gew.-% des Phenolharzes und einem Katalysator für das Phenolharz besteht.

14. Verfahren nach einem der Ansprüche 1 bis 13, wobei in Schritt (2) die flüssige Zusammensetzung aus einem Polyesterharz oder einem Epoxyharz, einer Streckflüssigkeit mit 20 bis 100 Gew.-% des Harzes, ausgewählt aus der Gruppe bestehend aus Trichlormethan, Trichlorethylen, Perchlorethylen, Trichlorfluormethan und Trichlortrifluorethan und einem Katalysator für das Harz besteht.

## Revendications

1. Procédé de fabrication d'une structure rigide (12, 30, 50, 60, 70) à partir de tubes d'une matière de fibres naturelles par assemblage de tronçons de tube sous forme d'une structure voulue, par imprégnation à l'aide d'une résine durcissable, et par durcissement de la résine, caractérisé en ce que le procédé comprend les étapes suivantes :
(1) l'assemblage d'un ou plusieurs tronçons de tube (32, 34, 42, 52, 54, 56, 62) ou d'éléments de tube (16, 40, 72A, 72B) sous forme de la structure voulue (12, 30, 50, 60, 70),
(2) l'imprégnation des tronçons de tube (32, 34, 42, 52, 54, 56, 62) ou éléments de tube (16, 40, 72A, 72B) d'une composition liquide contenant une résine thermodurcissable, un liquide de dilution de la résine thermodurcissable et un catalyseur de la résine thermodurcissable, la composition liquide étant choisie parmi (a) une résine phénolique, un alcool en C₁ à C₄ et un catalyseur de la résine phénolique, et (b) une résine polyester ou une résine époxyde, un liquide de dilution choisi dans le groupe qui comprend le dichlorométhane, le dichloréthylène, le perchloréthylène, le trichlorofluorométhane et le trichlorofluoréthane, et un catalyseur de la résine,
(3) la récupération du liquide de dilution, et
(4) la polymérisation de la résine thermodurcissable pour la formation de la structure rigide (12, 30, 50, 60, 70).

2. Procédé selon la revendication 1, dans lequel l'étape (1) est exécutée avant l'étape (2).

3. Procédé selon la revendication 1, dans lequel l'étape (2) est exécutée avant l'étape (1).

4. Procédé selon l'une quelconque des revendications 1 à 3, dans lequel la structure rigide est formée d'un seul tronçon de tube.

5. Procédé selon l'une quelconque des revendications 1 à 3, dans lequel la structure rigide est formée d'un seul tronçon d'élément de tube.

6. Procédé selon l'une quelconque des revendications 1 à 3, dans lequel la structure rigide (30, 50, 60) est formée d'au moins deux tronçons de tube (32, 34, 52, 54, 56, 62), et, dans l'étape (4), la résine thermodurcissable est polymérisée pour le raccordement des deux tronçons de tube ou plus (32, 34, 52, 54, 56, 62) les uns aux autres et pour la formation de la structure rigide (30, 50, 60).

7. Procédé selon l'une quelconque des revendications 1 à 3, dans lequel la structure rigide (70) est formée de deux tronçons d'éléments de tube ou plus (72A, 72B), et, dans l'étape (4), la résine thermodurcissable est polymérisée pour le raccordement des deux tronçons ou plus d'éléments de tube (72A, 72B) les uns aux autres pour la formation de la structure rigide (70).

8. Procédé selon l'une quelconque des revendications 1 à 3, dans lequel la structure rigide est formée d'un ou plusieurs tronçons de tube (42) et d'un ou plusieurs tronçons d'éléments de tube (40), et, dans l'étape (4), la résine thermodurcissable est polymérisée pour le raccordement des tronçons de tube (42) et des tronçons d'éléments de tube (40) les uns aux autres et pour la formation de la structure rigide.

9. Procédé selon l'une quelconque des revendications 1 à 8, dans lequel la structure rigide (60) comporte un ou plusieurs organes supplémentaires (64) d'une matière de fibres naturelles, et, dans l'étape (1), les organes supplémentaires (64) sont assemblés aux tronçons de tube (62) ou aux éléments de tube avec la structure voulue, dans l'étape (2), les organes supplémentaires (64) sont imprégnés de la composition liquide, et, dans l'étape (4), la résine thermodurcissable est polymérisée pour le raccordement des organes supplémentaires (64) et des tronçons de tube (62) ou éléments de tube les uns aux autres et pour la formation de la structure rigide (60).

10. Procédé selon l'une quelconque des revendications 1 à 9, dans lequel le tube est choisi parmi les tubes formés de papier, de matière textile, de bagasse, de coton, de sisal, de lin, de chanvre, de paille et de jute.

11. Procédé selon la revendication 10, dans lequel le tube est formé d'une matière de fibres naturelles armée de fibres choisies dans le groupe qui comprend les fibres de carbone, les fibres de verre et les fibres de synthèse.

12. Procédé selon l'une quelconque des revendications 1 à 11, dans lequel le tube est un tube de papier kraft ou de panneau de particules enroulé en spirale ou en hélice.

13. Procédé selon l'une quelconque des revendications 1 à 12, dans lequel, dans l'étape (2), la composition liquide contient une résine phénolique, 20 à 100 % en poids, par rapport à la résine phénolique, d'un alcool en C₁ à C₄, et un catalyseur de la résine phénolique.

14. Procédé selon l'une quelconque des revendications 1 à 13, dans lequel, dans l'étape (2), la composition liquide contient une résine polyester ou une résine époxyde, 20 à 100 % en poids, par rapport à la résine, d'un liquide de dilution choisi dans le groupe formé par le dichlorométhane, le trichloréthylène, le perchloréthylène, le trichlorofluorométhane et le trichlorotrifluoréthane, et un catalyseur de la résine.
